# EUROPEAN PATENT SPECIFICATION

(11) **EP 3 859 255 B1**
(45) Date of publication and mention of the grant of the patent: **27.12.2023**
(21) Application number: 19888649.1
(22) Date of filing: 13.11.2019
(51) Int. Cl.: F25B 5/04, F25B 39/02, F25B 47/00, F25B 49/02, F25D 17/06, F25D 21/00, F25D 21/06

(54) **REFRIGERATOR**
KÜHLSCHRANK
RÉFRIGÉRATEUR

(30) Priority: 30.11.2018 KR 20180152393
(43) Date of publication of application: 04.08.2021
(73) Proprietor: Samsung Electronics Co., Ltd., Suwon-si 16677 (KR)
(72) Inventor: KIM, Do-Hyung, Suwon-si Gyeonggi-do 16677 (KR); YOO, Jung Woo, Suwon-si Gyeonggi-do 16677 (KR); YOO, Su-Cheol, Suwon-si Gyeonggi-do 16677 (KR)
(74) Representative: Walaski, Jan Filip
(86) International application number: PCT/KR2019/015393
(87) International publication number: WO 2020/111590

(56) References cited:
- EP-A2- 1 757 878
- EP-A2- 2 416 095
- CN-U- 204 787 448
- JP-A- 2017 516 972
- KR-A- 970 011 662
- KR-A- 970 011 662
- KR-A- 19990 056 244
- KR-A- 19990 056 244
- KR-A- 20000 052 192
- KR-A- 20090 074 292
- KR-A- 20090 074 292
- US-A- 5 771 701

## Description

The present disclosure relates to a refrigerator, and more particularly, to a refrigerator having a freezing chamber evaporator and a refrigerating chamber evaporator separately in each of a refrigerating chamber and a freezing chamber.

### [Background Art]

A refrigerator is a home appliance to store food in a fresh state at low temperature for a long time by lowering a temperature inside a storage chamber through a refrigeration cycle in which a refrigerant compresses, condenses, expands, and evaporates.

In the refrigerator, a compressor, a condenser, a throttle, and an evaporator are connected through a refrigerant passage, thereby forming a refrigeration cycle for cooling a freezing chamber and a refrigerating chamber. The compressor may compress a low-temperature and low-pressure gaseous refrigerant into a high-temperature and high-pressure gaseous refrigerant. The condenser may condense the refrigerant discharged from the compressor by exchanging heat with the air outside the refrigerator. The throttle (an expansion means) decompress a pressure of the refrigerant condensed in the condenser. The evaporator may evaporate the refrigerant decompressed in the throttle (the expansion means) and lower the temperature inside the storage chamber through heat exchange with the air inside the storage chamber.

When there are a plurality of storage chambers of the refrigerator, a fan for circulating a cold air may be provided in each of the plurality of storage chambers. In addition, since the evaporator is individually installed in each of the plurality of storage chambers, independent cooling may be performed for each storage chamber.

Refrigerators having freezing and refrigerating chamber evaporators are described in KR970011662 A, US5771701 A, CN204787448 U and KR19990056244 A.

Further relevant prior art documents are KR20090074292A, EP2416095A2 and EP1757878A2.

### Disclosure

### Technical Problem

An aspect of the present disclosure is to provide a refrigerator that enables a refrigerating chamber evaporator to replace an existing accumulator and defrost heater by improving a structure of the refrigerating chamber evaporator.

### Technical Solution

The present invention is disclosed in the independent claim 1. Further embodiments of the invention are set out in the dependent claims.

A length of the curved passage may be longer than a length of the straight passage.

The refrigerant inlet of the refrigerating chamber evaporator may be connected to the refrigerant outlet of the freezing chamber evaporator. The refrigerant outlet of the refrigerating chamber evaporator may be connected to an inlet of the compressor.

In the following, embodiments will be described. These

### Advantageous Effects

According to the invention, a refrigerating chamber evaporator may replace an existing accumulator and a defrost heater by improving a structure of a refrigerating chamber evaporator.

### Description of Drawings

FIG. 1 is a view illustrating a refrigerator according to an example not being part of the present invention.
FIG. 2 is a view illustrating a refrigeration cycle of the refrigerator illustrated in FIG. 1.
FIG. 3 is a view illustrating a structure of a refrigerating chamber evaporator of a refrigerator according to an embodiment of the present invention.
FIG. 4 is a view comparing phase changes of a refrigerant between a conventional refrigeration cycle and a refrigeration cycle according to an embodiment of the present invention.
FIG. 5 is a view illustrating natural defrost control of a refrigerating chamber evaporator of a refrigerator according to an embodiment of the present invention.
FIG. 6 is a timing diagram of natural defrost control of a refrigerating chamber evaporator based on the graph illustrated in FIG. 5.
FIG. 7 is a view illustrating another natural defrost control of a refrigerating chamber evaporator of a refrigerator according to an embodiment of the present invention.
FIG. 8 is a timing diagram of natural defrost control of a refrigerating chamber evaporator based on the graph illustrated in FIG. 7.
FIG. 9 is a view illustrating another natural defrost control of a refrigerating chamber evaporator of a refrigerator according to an embodiment of the present invention.
FIGS. 10 and 11 are timing diagrams of natural defrost control of a refrigerating chamber evaporator based on the graph illustrated in FIG. 9.

### Modes of the Invention

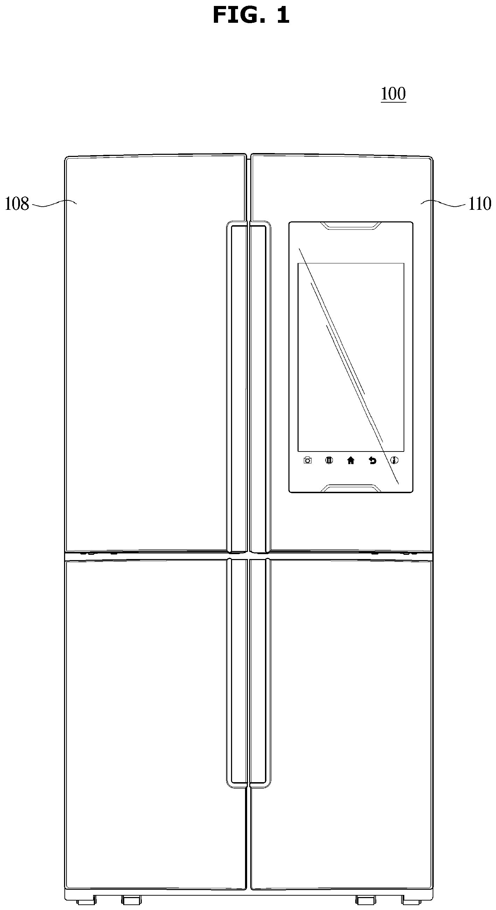

FIG. 1 is a view illustrating a refrigerator according to an an example not being part of the invention.

A refrigerator 100 includes a freezing chamber 108 and a refrigerating chamber 110. Each of the freezing chamber 108 and the refrigerating chamber 110 is cooled through a refrigeration cycle provided in the refrigerator 100 to lower a temperature of a food and maintain freshness.

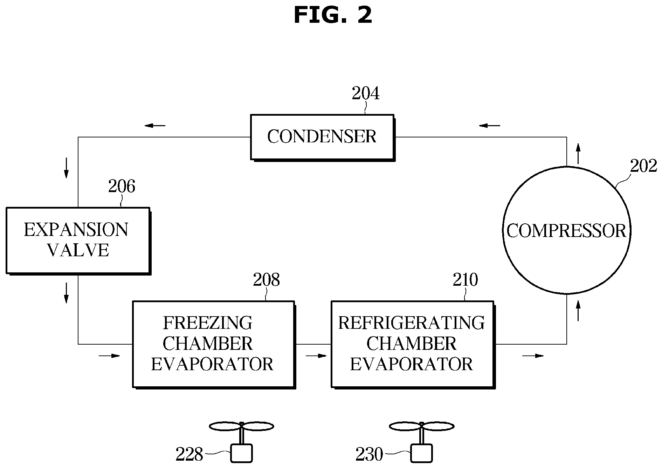

FIG. 2 is a view illustrating a refrigeration cycle of the refrigerator illustrated in FIG. 1. The refrigeration cycle of the refrigerator 100 illustrated in FIG. 2 includes a compressor 202 and a condenser 204, an expansion valve 206, a freezing chamber evaporator 208, a refrigerating chamber evaporator 210, a freezing chamber fan 228, and a refrigerating chamber fan 230.

The compressor 202 compresses a gaseous refrigerant flowing into a suction side at high-temperature and high-pressure and discharges it to a discharge side. The refrigerant discharged from the compressor 202 flows back into the suction side of the compressor 202 through the condenser 204, the expansion valve 206, the freezing chamber evaporator 208, and the refrigerating chamber evaporator 210.

The condenser 204 condenses the high-temperature and high-pressure refrigerant discharged from the compressor 202. The high-temperature and high-pressure gaseous refrigerant discharged from the compressor 202 may pass through the condenser 204 to exchange heat between the refrigerant and indoor air. In this heat exchange process, the refrigerant may change phase from a gaseous state to a liquid state.

The expansion valve 206, as an throttling device, decompresses the pressure of the refrigerant to a pressure at which evaporation can occur through a throttling action. In addition, the expansion valve 206 may be also involved in supplying an appropriate amount of refrigerant to enable sufficient heat exchange in the freezing chamber evaporator 208 and the refrigerating chamber evaporator 210 located at a next stage of the refrigeration cycle. The expansion valve 206 may be replaced with a capillary tube in an unclaimed embodiment.

The freezing chamber evaporator 208 evaporates the liquid refrigerant depressurized by the expansion valve 206. In this evaporation process, the liquid refrigerant may be vaporized. As the refrigerant evaporates in the freezing chamber evaporator 208, the surrounding air may be cooled through heat exchange with the surrounding air of the freezing chamber evaporator 208. The cooled air may be used to lower the temperature inside the freezing chamber 108.

The refrigerating chamber evaporator 210 evaporates the liquid refrigerant that has not been vaporized in the freezing chamber evaporator 208. In this evaporation process, the liquid refrigerant may be vaporized. As the refrigerant evaporates in the refrigerating chamber evaporator 210, the surrounding air may be cooled through heat exchange with the surrounding air of the refrigerating chamber evaporator 210. The cooled air may be used to lower the temperature inside the refrigerating chamber 110. The refrigerant that has passed through the refrigerating chamber evaporator 210 may flow back into the suction side of the compressor 202.

Referring to FIG. 2, the freezing chamber evaporator 208 and the refrigerating chamber evaporator 210 of the refrigerator 100 are connected in series with each other. In addition, based on a direction in which the refrigerant discharged from the compressor 202 flows (in a direction of an arrow in FIG. 2), the freezing chamber evaporator 208 is located in the front (upstream side) and the refrigerating chamber evaporator 210 is located in the rear (downstream side). That is, the refrigerant discharged from the compressor 202 first passes through the freezing chamber evaporator 208 and then passes through the refrigerating chamber evaporator 210.

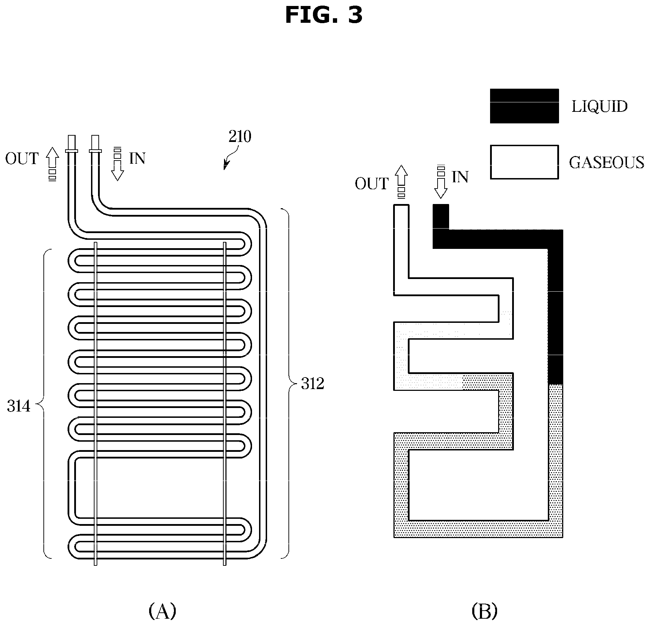

FIG. 3 is a view illustrating a structure of a refrigerating chamber evaporator of a refrigerator according to an embodiment.

Referring to FIG. 3, the refrigerating chamber evaporator 210 has a long refrigerant passage. A straight passage of a certain length is formed at a refrigerant inlet IN side of the refrigerating chamber evaporator 210, and a curved passage having a plurality of curved sections is formed at a refrigerant outlet OUT side of the refrigerating chamber evaporator 210. That is, a straight passage 312 is formed at the refrigerant inlet IN of the refrigerating chamber evaporator 210. After the straight passage 312, a U-trap 314, which is the curved passage having the plurality of curved sections, is formed. The U-trap 314 is a name according to a shape of a refrigerant tube in a letter 'U'.

In the refrigerating chamber evaporator 210, the refrigerant can flow relatively smoothly in a straight section 312. However, as the flow of the refrigerant is stagnated by the U-trap 314 composed of a plurality of 'U'-shaped curved sections, it is relatively slowly discharged. That is, the U-trap 314 is a structure for trapping the refrigerant introduced into the refrigerating chamber evaporator 210 so that it stays in the refrigerating chamber evaporator 210 for a relatively long time before exiting the refrigerating chamber evaporator 210. The refrigerant can be sufficiently evaporated while staying in the refrigerating chamber evaporator 210 for a longer time due to a refrigerant flow delay action of the U-trap 314.

When the refrigerant is sufficiently evaporated in the refrigerating chamber evaporator 210, it means that all (or most) of the refrigerant introduced into the refrigerating chamber evaporator 210 is vaporized. Due to the action of the U-trap 314 of the refrigerating chamber evaporator 210, all (or most) of the refrigerant flowing from the refrigerating chamber evaporator 210 to the compressor 202 may be in the gaseous state. Therefore, the liquid refrigerant does not flow into the compressor 202. In order to prevent liquid refrigerant from flowing into the compressor in a general refrigeration cycle, an accumulator may be used on the suction side of the compressor. However, in the refrigerator 100 according to an embodiment of the present invention, the refrigerating chamber evaporator 210 may take over a role of the accumulator by preventing the liquid refrigerant from flowing into the compressor 202 through the structure of the U-trap 314 of the refrigerating chamber evaporator 210. For this reason, it is not necessary to install the accumulator in a refrigerant passage between the refrigerating chamber evaporator 210 and the compressor 202.

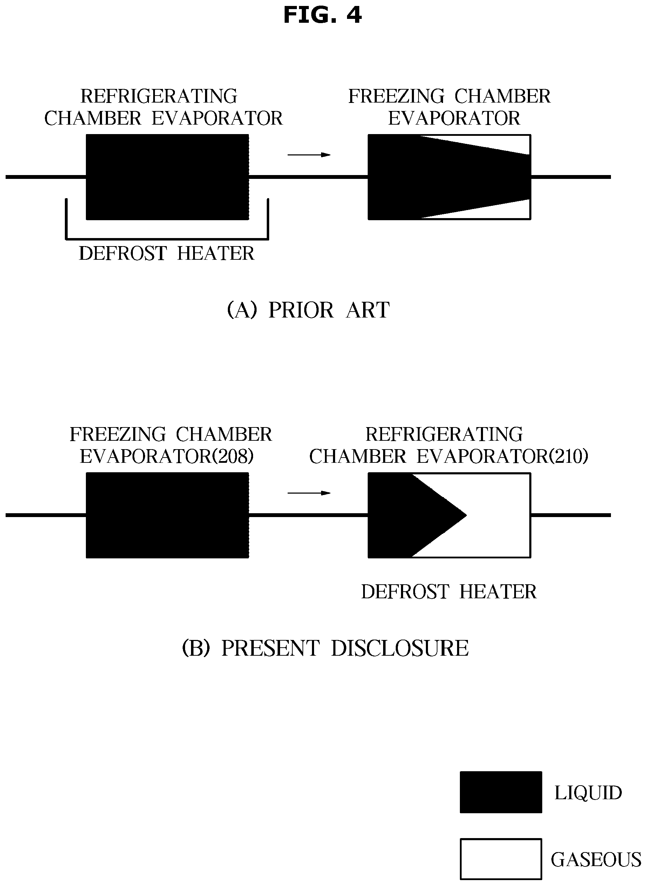

FIG. 4 is a view comparing phase changes of a refrigerant between a conventional refrigeration cycle and a refrigeration cycle according to an embodiment of the invention. FIG. 4A illustrates the conventional refrigeration cycle, and FIG. 4B illustrates the refrigeration cycle according to an embodiment of the present invention.

As illustrated in FIG. 4A, in the conventional refrigeration cycle, the refrigerating chamber evaporator may be disposed in the front (upstream of the refrigerant flow) and the freezing chamber evaporator may be disposed in the rear (downstream of the refrigerant flow). Due to this arrangement, the liquid refrigerant and the gaseous refrigerant are mixed to the outlet of the end of the refrigerating chamber evaporator, and a frost may be formed on a surface of the refrigerating chamber evaporator by freezing of the low temperature and a humidity load in the refrigerating chamber.

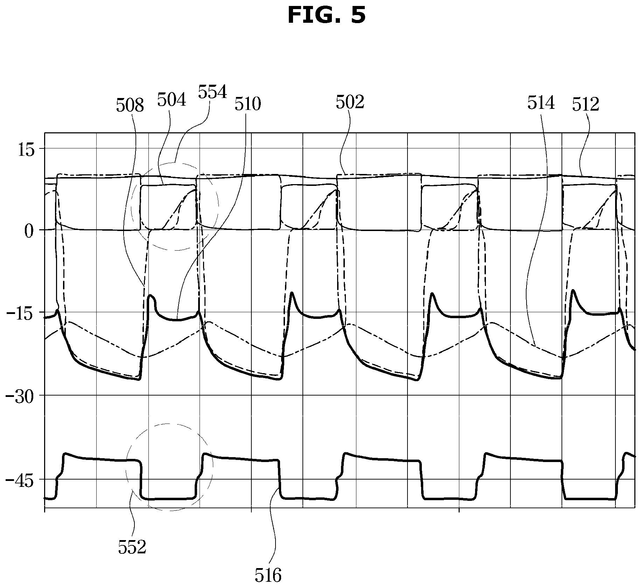

In contrast, in the refrigeration cycle according to an embodiment of the present invention, as illustrated in FIG. 4B, by placing the refrigerating chamber evaporator 210 having a relatively high evaporation pressure behind the freezing chamber evaporator 208 (downstream of the refrigerant flow) and setting an appropriate amount of refrigerant, the refrigerating chamber evaporator 210 starts evaporation in a state where a evaporation dry point of the refrigerant is high, and sufficient evaporation is achieved in a middle portion of the refrigerating chamber evaporator 210. Sufficient evaporation of the refrigerant in the refrigerating chamber evaporator 210 may minimize frost formation (implantation) of the refrigerating chamber evaporator 210. In the refrigerating chamber evaporator 210, the U-trap 314 minimizes the formation of frost in the refrigerating chamber evaporator 210 by promoting an increase in the temperature at the rear end (the plurality of curved sections closed to the refrigerant outlet OUT side) and early evaporation of the refrigerant. In addition, in the refrigerating chamber evaporator 210, the temperature of the rear end (the plurality of curved sections close to the refrigerant outlet OUT side) increases due to the U-trap 314 structure. When the refrigerating chamber fan 230 is driven while the temperature of the refrigerating chamber evaporator 210 is increased as described above, natural defrost inside the refrigerating chamber 110 is performed without a separate defrost heater (see a description of FIG. 5 to be described later). For this reason, the refrigerator 100 does not require the defrost heater to remove frost from the refrigerating chamber evaporator 210.

FIG. 5 is a view illustrating natural defrost control of a refrigerating chamber evaporator of a refrigerator according to an embodiment. The refrigerator 100 obtains a natural defrost effect capable of removing frost formed inside the refrigerating chamber 110 by driving the refrigerating chamber fan 230 while the temperature of the refrigerating chamber evaporator 210 is increased due to the U-trap 314 structure of the refrigerating chamber evaporator 210 as illustrated in FIG. 3. A meaning of each graph illustrated in FIG. 5 is as follows.

Reference numeral 502 may denote a driving voltage of the freezing chamber fan 228. Reference numeral 504 may denote a driving voltage of the refrigerating chamber fan 230. Reference numeral 506 may be an inlet temperature of the refrigerating chamber evaporator 210. Reference numeral 508 may be an outlet temperature of the refrigerating chamber evaporator 210. Reference numeral 510 may denote a temperature of the freezing chamber evaporator 208. Reference numeral 512 may denote a temperature of the refrigerating chamber 110. Reference numeral 514 may denote a temperature of the freezing chamber 108. Reference numeral 516 may denote a driving power of the compressor 202.

As illustrated in FIG. 5, as the refrigerating chamber fan 230 is turned on at every off point 552 of an operation cycle of the compressor 202, which is periodically turned on and off (554), natural defrost the inside of the refrigerating chamber 110 may be performed. As described above, in the refrigerating chamber evaporator 210, the temperature of the rear end (the plurality of curved sections close to the refrigerant outlet OUT side) increases due to the U-trap 314 structure. As described above, by driving the refrigerating chamber fan 230 while the temperature of the refrigerating chamber evaporator 210 is increased, the natural defrost inside the refrigerating chamber 110 is performed without the separate defrost heater.

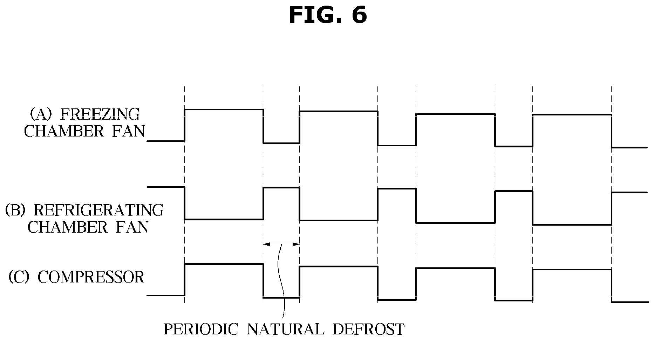

FIG. 6 is a timing diagram of natural defrost control of a refrigerating chamber evaporator based on the graph illustrated in FIG. 5.

As illustrated in FIG. 6, as the refrigerating chamber fan 230 is turned on at each off point of the operation cycle of the compressor 202 that is periodically turned on and off, the natural defrost inside the refrigerating chamber 110 is performed using a high temperature of the refrigerant according to the structure of the U-trap 314 of the refrigerating chamber evaporator 210. Consequently, it is possible to remove frost inside the refrigerating chamber 110 through natural defrost even if there is no the defrost heater.

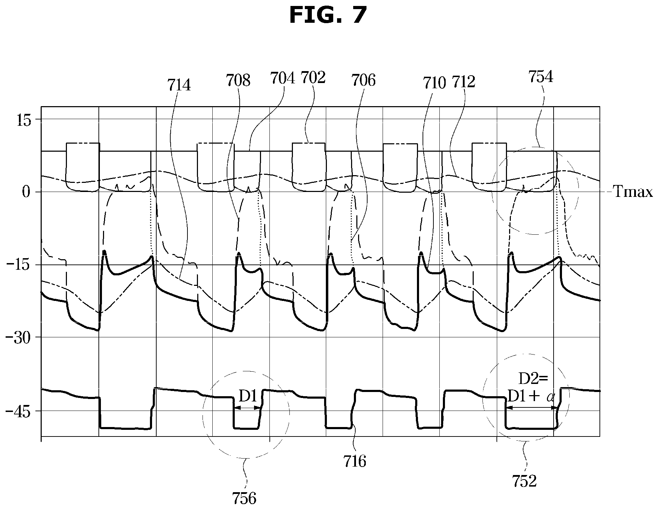

FIG. 7 is a view illustrating another natural defrost control of a refrigerating chamber evaporator of a refrigerator according to an embodiment. The refrigerator 100 obtains the natural defrost effect capable of removing frost formed inside the refrigerating chamber 110 by driving the refrigerating chamber fan 230 while the temperature of the refrigerating chamber evaporator 210 is increased due to the U-trap 314 structure of the refrigerating chamber evaporator 210 as illustrated in FIG. 3. In particular, by variably adjusting a duration of the natural defrost performed in each operation cycle of the compressor 202, the internal temperature of the refrigerating chamber 110 may be suppressed from excessively increasing, and a necessary natural defrost effect may be obtained. A meaning of each graph illustrated in FIG. 7 is as follows.

Reference numeral 702 may denote the driving voltage of the freezing chamber fan 228. Reference numeral 704 may denote the driving voltage of the refrigerating chamber fan 230. Reference numeral 706 may be the inlet temperature of the refrigerating chamber evaporator 210. Reference numeral 708 may be the outlet temperature of the refrigerating chamber evaporator 210. Reference numeral 710 may denote the temperature of the freezing chamber evaporator 208. Reference numeral 712 may denote the temperature of the refrigerating chamber 110. Reference numeral 714 may denote the temperature of the freezing chamber 108. Reference numeral 716 may denote the driving power of the compressor 202.

As illustrated in FIG. 7, as the refrigerating chamber fan 230 is turned on at every off point 552 of an operation cycle of the compressor 202, which is periodically turned on and off (754), natural defrost the inside of the refrigerating chamber 110 may be performed. As described above, in the refrigerating chamber evaporator 210, the temperature of the rear end (the plurality of curved sections close to the refrigerant outlet OUT side) increases due to the U-trap 314 structure. As described above, by driving the refrigerating chamber fan 230 while the temperature of the refrigerating chamber evaporator 210 is increased, the natural defrost inside the refrigerating chamber 110 is performed without the separate defrost heater.

In the natural defrost control of the refrigerating chamber 110 illustrated in FIG. 7, a natural defrost time is kept relatively short in order to prevent unnecessary temperature rise of the refrigerating chamber 110, and if necessary, the natural defrost time is added (extended) to perform the natural defrost for a relatively longer time, thereby reducing the natural defrost time.

When the duration of the natural defrost at each operation cycle of the compressor 202 is too long, the internal temperature of the refrigerating chamber 110 rises more than necessary due to the natural defrost, and as a result, foods stored in the refrigerating chamber 110 may be exposed to high temperatures exceeding the proper storage temperature.

Accordingly, as illustrated by reference numeral 756 of FIG. 7, by performing natural defrost for a relatively short D1 time at each off point of a plurality of operation cycles of the compressor 202 and maintaining the inlet temperature or the outlet temperature of the evaporator 210 below a preset temperature Tmax, the internal temperature of the refrigerating chamber 110 is prevented from rising more than necessary due to natural defrost. While maintaining the natural defrost time as the relatively short D1 time (a first time), the natural defrost of the refrigerating chamber 110 may not be sufficiently performed. Accordingly, as indicated by reference numeral 752 of FIG. 7, the natural defrost time is extended longer than the previously performed natural defrost time D1 to perform natural defrost for a D2 time (>D1, a second time). The natural defrost time D2 is relatively longer than the natural defrost time D1. In this way, by mixing the natural defrost for the D1 time and the natural defrost for D2 time, which is longer than D1, the natural defrost that may be insufficient due to the natural defrost for D1 is supplemented through the natural defrost of the relatively longer D2 time. That is, by shortening the natural defrost time according to the temperature of the refrigerating chamber evaporator 210, unnecessary temperature rise of the refrigerating chamber 110 may be prevented (natural defrost D1), but if necessary, additional natural defrost may be performed periodically or aperiodically to compensate for the insufficient natural defrost time (natural defrost D2).

To this end, the defrosting during the D1 time allows the temperature of the refrigerating chamber 110 to be maintained below the set temperature. It is preferable to perform the defrosting during the D2 time so that the temperature of the refrigerating chamber 110 reaches a target temperature required for naturally defrosting of the refrigerating chamber 110.

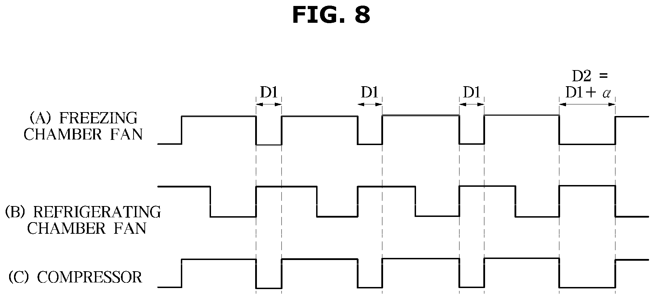

FIG. 8 is a timing diagram of natural defrost control of a refrigerating chamber evaporator based on the graph illustrated in FIG. 7.

Referring to FIG. 8, as the refrigerating chamber fan 230 is turned on at each off point of the operation cycle of the compressor 202 that is periodically turned on and off, the natural defrost inside the refrigerating chamber 110 is performed using a high temperature of the refrigerant according to the structure of the U-trap 314 of the refrigerating chamber evaporator 210. Basically, the internal temperature of the refrigerating chamber 110 is maintained below the Tmax of FIG. 7 by performing natural defrost for a relatively short time as long as the time D1 of FIG. 8, but by periodically or aperiodically performing additional natural defrost for the D2 time longer than D1 time by α, the natural defrost time, which may be insufficient due to the natural defrost during the D1 time, is compensated through the natural defrost for the relatively longer D2 time.

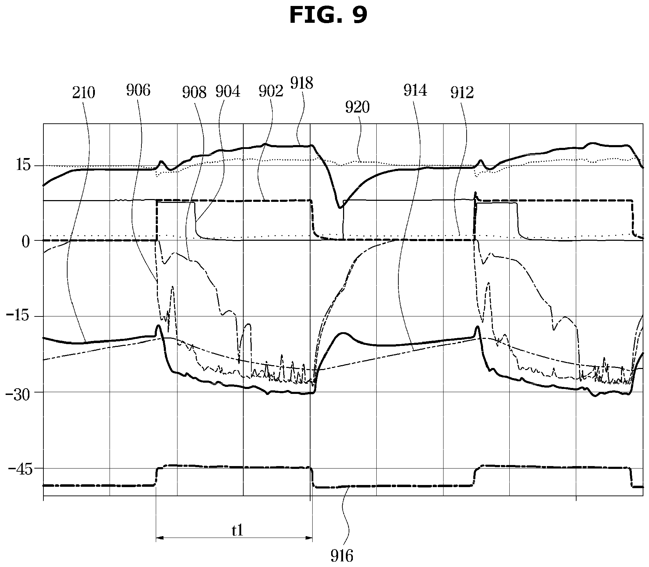

FIG. 9 is a view illustrating another natural defrost control of a refrigerating chamber evaporator of a refrigerator according to an embodiment. A meaning of each graph illustrated in FIG. 9 is as follows.

Reference numeral 902 may denote the driving voltage of the freezing chamber fan 228. Reference numeral 904 may denote the driving voltage of the refrigerating chamber fan 230. Reference numeral 906 may be the inlet temperature of the refrigerating chamber evaporator 210. Reference numeral 908 may be the outlet temperature of the refrigerating chamber evaporator 210. Reference numeral 910 may denote the temperature of the freezing chamber evaporator 208. Reference numeral 912 may denote the temperature of the refrigerating chamber 110. Reference numeral 914 may denote the temperature of the freezing chamber 108. Reference numeral 916 may denote the driving power of the compressor 202. Reference numeral 918 may denote a condenser temperature. Reference numeral 920 may denotes an suction side temperature of the compressor 202.

When an ambient temperature of the refrigerator 100 is a low temperature condition (for example, below 18 °C) and the temperature of the refrigerating chamber evaporator 210 does not reach the high temperature required for natural defrost (lack of heat source for defrost), a cooling operation of the refrigerating chamber 110 is stopped until the temperature of 210 of the refrigerating chamber evaporator 210 reaches a target temperature required for natural defrost. In this case, the target temperature of the refrigerating chamber evaporator 210 may be a temperature obtained by adding a predetermined temperature (e.g., 3° C) to the set temperature (a desired storage temperature set by the user) of the refrigerating chamber 110. When the internal temperature of the refrigerating chamber 110 rises to the target temperature due to the interruption of the cooling operation of the refrigerating chamber 110, the natural defrost of the refrigerating chamber 110 is performed using the temperature of the refrigerating chamber evaporator 210.

In addition, as in section t1 of FIG. 9, the temperature of the refrigerating chamber evaporator 210 may drop rapidly due to an independent cooling operation of the freezing chamber 108. The rapid drop in the temperature of the refrigerating chamber evaporator 210 may refer to that the natural defrost cannot be performed using the temperature of the refrigerating chamber evaporator 210. Therefore, in order to prevent the temperature of the refrigerating chamber evaporator 210 from dropping rapidly due to the independent cooling operation of the freezing chamber 108, the cooling operation of the freezing chamber 108 is made dependent on the operation of the refrigerating chamber fan 230. That is, since the cooling operation of the freezing chamber 108 is performed only when the refrigerating chamber fan 230 is operated, it is possible to prevent the temperature of the refrigerating chamber evaporator 210 from being excessively lowered due to the independent operation of the freezing chamber 108. However, if the cooling operation of the freezing chamber 108 is dependent on the operation of the refrigerating chamber fan 230, the temperature of the freezing chamber 108 may be excessively increased, so a maximum temperature of the freezing chamber 108 is set. When the temperature of the freezing chamber 108 reaches the set maximum temperature, the dependent operation may be canceled so that the temperature of freezing chamber 108 does not exceed the set maximum temperature.

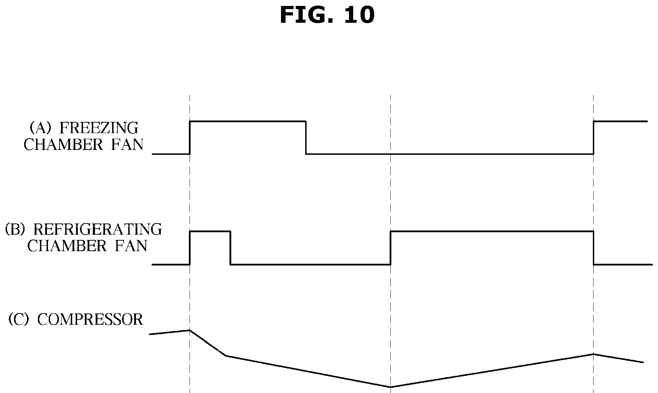

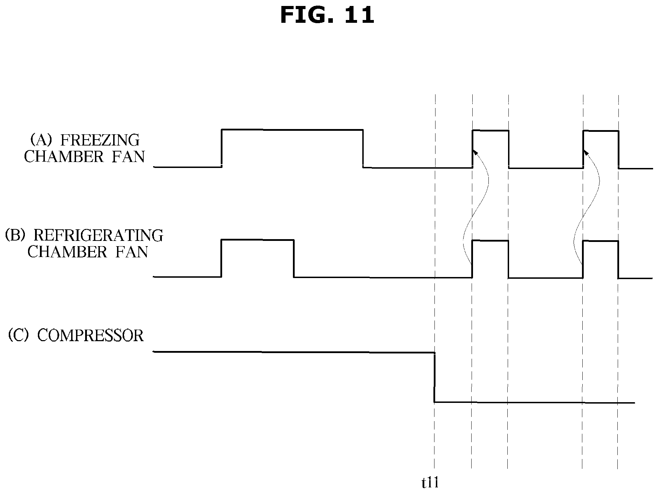

FIGS. 10 and 11 are timing diagrams of natural defrost control of a refrigerating chamber evaporator based on the graph illustrated in FIG. 9.

As illustrated in FIG. 10, when the ambient temperature of the refrigerator 100 falls below a preset temperature (for example, 18°C), the refrigerating chamber 110 is not cooled, but only the refrigerating chamber fan 230 is operated so that the temperature of the refrigerating chamber evaporator 210 is set to the target temperature (refrigerating chamber set temperature + 3°C). Due to the increase in temperature of the refrigerating chamber evaporator 210, the natural defrosting capability of the refrigerating chamber 110 is secured.

In addition, as illustrated in FIG. 11, when the ambient temperature of the refrigerator 100 is lowered below a preset temperature (a section after t11 in FIG. 11), a freezing operation of the freezing chamber 108 may be performed depending on a timing of the refrigerating chamber fan 230 being driven. When the freezing chamber 108 is independently operated to cool, the temperature of the refrigerating chamber evaporator 210 may drop rapidly. When the temperature of the refrigerating chamber evaporator 210 drops rapidly, the high temperature required for natural defrosting of the refrigerating chamber 110 is not secured. Therefore, by making the cooling operation of the freezing chamber 108 dependent on the operation of the refrigerating chamber fan 230, the temperature of the refrigerating chamber evaporator 210 is prevented from dropping rapidly due to the independent cooling operation of the freezing chamber 108, and the temperature required for natural defrost may be secured.

The present invention is disclosed in the following claims.

## Claims

1. A refrigerator (100) in which a compressor (202), a condenser (204), a throttle (206), a freezing chamber evaporator (208), and a refrigerating chamber evaporator (210) are connected through a refrigerant passage to form a refrigeration cycle, and
wherein the refrigerating chamber evaporator (210) is provided between the freezing chamber evaporator (208) and the compressor (202);
a straight passage (312) of a certain length is formed at a refrigerant inlet side (IN) of the refrigerating chamber evaporator (210); wherein after the straight passage (312), a U-trap (314), which is
a curved passage (314) having a plurality of curved sections, is formed at a refrigerant outlet side (OUT) of the refrigerating chamber evaporator
(210), wherein the U-trap (314) is a name according to a shape of a refrigerant tube in a letter 'U',
wherein the refrigerator (100) comprises a refrigerating chamber (110), and the refrigerating chamber (110) includes a refrigerating chamber fan (230) configured to defrost the refrigerating chamber (110) by using the plurality of curved sections of the refrigerating chamber evaporator (210) as a heat source,
wherein the refrigerator (100) obtains a natural defrost effect of removing frost formed inside the refrigerating chamber (110) by driving the refrigerating chamber fan (230) while the temperature of the refrigerating chamber evaporator (210) is increased due to the U-trap (314) structure of the refrigerating chamber evaporator (210).

2. The refrigerator (100) according to claim 1, wherein a length of the curved passage (314) is longer than a length of the straight passage (312).

3. The refrigerator (100) according to claim 1, wherein:
the refrigerant inlet of the refrigerating chamber evaporator (210) is connected to the refrigerant outlet of the freezing chamber evaporator (208); and
the refrigerant outlet of the refrigerating chamber evaporator (210) is connected to an inlet of the compressor (202).

## Patentansprüche

1. Kühlschrank (100),
bei dem ein Kompressor (202), ein Kondensator (204), eine Drossel (206),
ein Gefrierkammerverdampfer (208) und ein Kühlkammerverdampfer (210) über einen Kältemitteldurchgang verbunden sind, um einen Kühlkreislauf zu bilden, und
wobei
der Kühlkammerverdampfer (210) zwischen dem Gefrierkammerverdampfer (208) und dem Kompressor (202) vorgesehen ist;
ein gerader Durchgang (312) einer bestimmten Länge an einer Kältemitteleinlassseite (IN) des Kühlkammerverdampfers (210) ausgebildet ist; wobei nach dem geraden Durchgang (312) eine U-Falle (314), die
ein gekrümmter Durchgang (314) mit mehreren gekrümmten Abschnitten ist, an einer Kältemittelaustrittsseite (OUT)
des Kühlkammerverdampfers (210) ausgebildet ist, wobei die U-Falle (314) ein Name entsprechend einer Form eines Kältemittelrohrs in einem Buchstaben ,U' ist,
wobei der Kühlschrank (100)
eine Kühlkammer (110) umfasst und
die Kühlkammer (110) einen Kühlkammerventilator (230) beinhaltet, der dazu konfiguriert ist, die Kühlkammer (110) abzutauen, indem er die Vielzahl von gekrümmten Abschnitten des Kühlkammerverdampfers (210) als Wärmequelle verwendet,
wobei der Kühlschrank (100) einen natürlichen Abtaueffekt des Entfernens von in der Kühlkammer (110) gebildetem Frost erzielt, indem der Kühlkammerventilator (230) angetrieben wird, während die Temperatur des Kühlkammerverdampfers (210) aufgrund des Aufbaus, als U-Falle (314), des Kühlkammerverdampfers (210) erhöht wird.

2. Kühlschrank (100) nach Anspruch 1, wobei die Länge des gekrümmten Durchgangs (314) länger ist als eine Länge des geraden Durchgangs (312).

3. Kühlschrank (100) nach Anspruch 1, wobei:
der Kältemitteleinlass des Kühlkammerverdampfers (210)
mit dem Kältemittelauslass des Gefrierkammerverdampfers (208) verbunden ist; und
der Kältemittelauslass des Kühlkammerverdampfers (210) mit einem Einlass des Kompressors (202) verbunden ist.

## Revendications

1. Réfrigérateur (100) dans lequel un compresseur (202), un condensateur (204), un étrangleur (206), un évaporateur de chambre de congélation (208), et un évaporateur de chambre de réfrigération (210) sont reliés via un passage de fluide frigorigène pour former un cycle de réfrigération, et
dans lequel l'évaporateur de chambre de réfrigération (210) est disposé entre l'évaporateur de chambre de congélation (208) et le compresseur (202) ;
un passage droit (312) d'une certaine longueur est formé au niveau d'un côté d'entrée (IN) de fluide frigorigène de l'évaporateur de chambre de réfrigération (210) ; dans lequel, après le passage droit (312), un siphon en U (314), qui est un passage incurvé (314) ayant une pluralité de sections incurvées, est formé au niveau d'un côté sortie (OUT) de fluide frigorigène de l'évaporateur de chambre de réfrigération (210), dans lequel le siphon en U (314) est nommé ainsi du fait de la forme d'un tube frigorifique en lettre « U »,
dans lequel le réfrigérateur (100) comprend une chambre de réfrigération (110), et
la chambre de réfrigération (110) comprend un ventilateur de chambre de réfrigération (230) configuré pour dégivrer la chambre de réfrigération (110) en utilisant la pluralité de sections incurvées de l'évaporateur de chambre de réfrigération (210) comme source de chaleur,
dans lequel le réfrigérateur (100) obtient un effet de dégivrage naturel consistant à éliminer le givre formé à l'intérieur de la chambre de réfrigération (110) en entraînant le ventilateur de la chambre de réfrigération (230) tandis que la température de l'évaporateur de chambre de réfrigération (210) est augmentée en raison de la structure du siphon en U (314) de l'évaporateur de chambre de réfrigération (210).

2. Réfrigérateur (100) selon la revendication 1, dans lequel une longueur du passage incurvé (314) est plus longue qu'une longueur du passage droit (312).

3. Réfrigérateur (100) selon la revendication 1, dans lequel :
l'entrée de fluide frigorigène de l'évaporateur de chambre de réfrigération (210) est reliée à la sortie de fluide frigorigène de l'évaporateur de chambre de congélation (208) ; et
la sortie de fluide frigorigène de l'évaporateur de chambre de réfrigération (210) est reliée à une entrée du compresseur (202).
